# EUROPÄISCHE PATENTSCHRIFT

(11) **EP 1 771 267 B1**
(45) Veröffentlichungstag und Bekanntmachung des Hinweises auf die Patenterteilung: **28.05.2008**
(21) Anmeldenummer: 06723583.8
(22) Anmeldetag: 21.03.2006
(51) Int. Cl.: B22F 3/00, B22F 3/105, B29C 67/00

(54) **VORRICHTUNG UND VERFAHREN ZUM AUFTRAGEN VON SCHICHTEN EINES PULVERFÖRMIGEN MATERIALS AUF EINE OBERFLÄCHE**
DEVICE AND METHOD FOR APPLYING LAYERS OF A POWDERY MATERIAL TO A SURFACE
DISPOSITIF ET PROCEDE POUR APPLIQUER DES COUCHES DE MATIERE PULVERULENTE SUR UNE SURFACE

(30) Priorität: 12.04.2005 DE 102005016940
(43) Veröffentlichungstag der Anmeldung: 11.04.2007
(73) Patentinhaber: EOS GmbH Electro Optical Systems, 82152 Krailling (DE)
(72) Erfinder: PERRET, Hans, 81543 München (DE); HALDER, Thomas, 81371 München (DE); PHILIPPI, Jochen, 81377 München (DE); KELLER, Peter, 82152 Krailling (DE); CANTZLER, Gerd, 82061 Neuried (DE); GÖTH, Michael, 81539 München (DE)
(74) Vertreter: Hofer, Dorothea
(86) Internationale Anmeldenummer: PCT/EP2006/002572
(87) Internationale Veröffentlichungsnummer: WO 2006/108499

(56) Entgegenhaltungen:
- EP-A- 0 945 202
- EP-A- 1 270 185
- DE-A1- 4 325 573
- DE-C1- 19 514 740
- DE-C1- 19 853 978

## Beschreibung

Die vorliegende Erfindung bezieht sich auf eine Vorrichtung und ein Verfahren zum Auftragen von Schichten eines pulverförmigen Materials auf eine Oberfläche nach dem Oberbegriff des Patentanspruchs 1 bzw. 12 sowie auf eine Vorrichtung zur Herstellung eines dreidimensionalen Objekts nach dem Oberbegriff des Anspruchs 19.

Eine derartige Vorrichtung und ein derartiges Verfahren zum Auftragen von Schichten eines pulverförmigen Materials sind z.B. aus der DE 195 14 740 C1 bekannt. Der in der DE 195 14 740 C1 für eine Lasersintervorrichtung beschriebene Beschichter weist eine einzelne Klinge auf, die beim Auftragen einer Schicht einen Vorrat an Material für eine Schicht vor sich her schiebt. Hier besteht das Problem, dass der Vorrat an Material für eine Schicht entweder zu gering ist, sodass keine vollständige Schicht in dem Arbeitsbereich (Baufeld) aufgetragen werden kann, oder aber der Vorrat größer ist als die für eine Schicht benötigte Menge, sodass dann überschüssiges Material aus dem Arbeitsbereich nach außen geschoben wird. Dieses überschüssige Material wird nicht mehr für die Auftragung einer weiteren Schicht verwendet, weshalb es in speziellen Auffangbehältern gesammelt werden muss und zu einem erhöhten Materialverbrauch beiträgt.

DE 198 53 978 C1 beschreibt eine Vorrichtung für das selektive Laser-Schmelzen zur Herstellung eines Formkörpers. Insbesondere weist diese Vorrichtung eine Nivelliereinrichtung zur Verteilung des Werkstoffpulvers sowie eine Schleifeinrichtung, mit der die Bearbeitungsfläche des im Aufbauvolumen befindlichen Formkörpers geglättet werden kann, auf.

EP 1 270 185 A1 beschreibt ein Beschichtungssystem, welches in einem 3D-Generierungsverfahren verwendet werden kann. Insbesondere kann mit diesem System ein hochviskoses Material aufgetragen werden, ohne bereits verfestigte Schichten zu beeinträchtigen. Hierzu wird vor dem Auftragen einer Materialschicht dem Material ein Viskositätsmodifizierer hinzugefügt, welcher die Viskosität absenkt. Nach dem Auftragen einer Materialschicht wird dieser Viskositätsmodifizierer wieder entfernt.

Die deutsche Offenlegungsschrift DE 43 25 573 A1 beschreibt eine Vorrichtung zur sukzessiven Aufbringung von übereinanderliegenden Pulverschichten. Das Aufbringen geschieht hierbei durch ein verschiebbares Wischerblatt, das durch einen Generator zu Vibrationen angeregt wird. Dadurch kann eine Pulverschicht gleichmäßig aufgetragen werden, ohne daß während des Nivelliervorgangs bereits nivellierte Oberflächenbereiche wieder aus dem Pulverbett gerissen werden.

Aus der EP 945 202 A2 ist ein Beschichter mit zwei Klingen bekannt. Wie der in der DE 195 14 740 C1 beschreibene Beschichter weist auch dieser Beschichter das Problem auf, dass während des Auftragens einer Schicht überschüssiges Material vor der in Bewegungsrichtung des Beschichters vorderen Klinge aus dem Arbeitsbereich nach außen geschoben wird. Dieses von der Klinge nach außen geschoben Material wird auch hier nicht für das Auftragen einer weiteren Schicht verwendet und trägt daher wie oben zu einem erhöhten Materialverbrauch bei.

Das aufzutragende Material kann aus verschiedenartigen Materialien z.B. Polymeren, Metallen, Keramik oder Verbundwerkstoffen bestehen. Je nach Material und Prozessführung in einer Vorrichtung zum Herstellen eines dreidimensionalen Objekts kann eine Erwärmung der Schichten verwendet werden. In diesem Fall kann das im Randbereich angesammelte Material materialabhängig insbesondere bei Verwendung von Polymeren während der Herstellung eines dreidimensionalen Objekts thermisch geschädigt werden und damit für die Wiederverwendung unbrauchbar werden.

Der vorliegenden Erfindung liegt daher die Aufgabe zugrunde, eine Vorrichtung und ein Verfahren zum Auftragen von Schichten eines pulverförmigen Materials bereitzustellen, mit denen die Schichten zuverlässig und ohne Materialverlust aufgetragen werden können.

Die Aufgabe wird erfüllt durch eine Vorrichtung zum Auftragen von Schichten eines pulverförmigen Materials nach Anspruch 1, 8 und 9 und ein Verfahren nach Anspruch 11.

Die Erfindung hat den Vorteil, dass das von einer Klinge des Beschichters während des Auftragens einer Schicht aus dem Arbeitsbereich nach außen geschobene Material für das Auftragen der nächsten Schicht wieder verwendet wird und daher kein Materialverlust auftritt.

Bei der Verwendung einer Zuführeinrichtung, bei der die Zufuhr von Material in einen Zuführbereich unterbrochen wird, wenn eine vorbestimmte Menge an Material in dem Zuführbereich vorhanden ist, findet eine selbstregulierende Dosierung der Materialzufuhr statt, auch wenn das beim Auftragen einer Schicht anfallende überschüssige Material von der Klinge in den Zuführbereich befördert wird.

Ein weiterer Vorteil der Erfindung besteht darin, dass die thermische Belastung des beim Auftragen einer Schicht als überschüssig anfallenden Materials gering ist.

Wenn eine erhöhte Prozesstemperatur benötigt wird, hat die Verwendung einer Materialtransporteinrichtung mit einer beheizten Wanne den Vorteil, dass das Material vor dem Autragen als Schicht vorgewärmt wird und damit die Bauzeit verkürzt wird.

Bei der Verwendung einer als Fluidisierungseinrichtung ausgebildeten Materialtransporteinrichtung, bei der die Fluidisierung durch vorgewärmtes Gas erfolgt, besteht der Vorteil, dass das fluidisierte Pulver vorgewärmt wird und damit die Bauzeit verkürzt werden kann, wenn eine erhöhte Prozesstemperatur benötigt wird.

Weitere Merkmale und Zweckmäßigkeiten der Erfindung ergeben sich aus der Beschreibung von Ausführungsbeispielen anhand der beigefügten Zeichnungen.

Von den Figuren zeigen:
- Fig. 1: eine schematische Darstellung einer Lasersintervorrichtung mit der erfindungsgemäßen Vorrichtung;
- Fig. 2: eine schematische Darstellung einer ersten Ausführungsform der Vorrichtung zum Auftragen von Schichten eines pulverförmigen Materials;
- Fig. 3 - 5: die Vorrichtung zum Auftragen von Schichten eines pulverförmigen Materials aus Fig. 2 in verschiedenen Phasen des Betriebs; und
- Fig. 6: eine schematische Darstellung einer zweiten Ausführungsform der Vorrichtung zum Auftragen von Schichten eines pulverförmigen Materials.

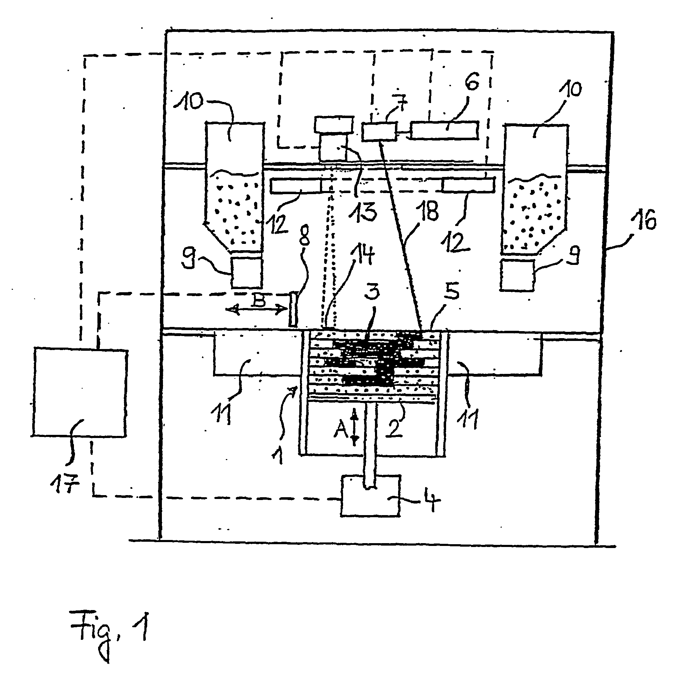

Fig. 1 zeigt eine Lasersintervorrichtung als Ausführungsbeispiel einer Vorrichtung zur Herstellung eines dreidimensionalen Objekts, in der die erfindungsgemäße Vorrichtung und das erfindungsgemäße Verfahren verwendet werden. Die Lasersintervorrichtung weist einen nach oben offenen Behälter 1 auf. In dem Behälter 1 ist ein Träger 2 zum Tragen des zu bildenden Objekts 3 vorgesehen. Der Träger 2 ist mittels eines Antriebs 4 in dem Behälter 1 in vertikaler Richtung A auf und ab bewegbar. Der obere Rand des Behälters 1 definiert eine Arbeitsebene 5 (Baufeld). Oberhalb der Arbeitsebene 5 ist eine Bestrahlungseinrichtung 6 in Form eines Lasers angeordnet, die einen gerichteten Laserstrahl abgibt, der über eine Ablenkvorrichtung 7 auf die Arbeitsebene 5 abgelenkt wird. Ferner ist ein Beschichter 8 zum Aufbringen einer Schicht eines zu verfestigenden Pulvermaterials auf die Oberfläche des Trägers 2 oder eine zuletzt verfestigte Schicht vorgesehen. Der Beschichter 8 ist mittels eines durch die Pfeile B schematisch angedeuteten Antriebs zwischen zwei Endstellungen über die Arbeitsebene 5 hin und her bewegbar. Durch zwei Materialzuführeinrichtungen 9 links und rechts vom Baufeld sowie zwei Materialtransporteinrichtungen 11 wird der Beschichter aus zwei Pulvervorratsbehältern 10 gespeist.

Die Vorrichtung weist außerdem eine über der Arbeitsebene 5 angeordnete Heizeinrichtung 12 zum Vorerwärmen einer aufgetragenen aber noch nicht gesinterten Pulverschicht auf eine für das Verfestigen bzw. Sintern geeignete Arbeitstemperatur T_{A} auf.

In einem Abstand oberhalb der Arbeitsebene 5 ist eine z.B. als Pyrometer oder IR-Kamera ausgebildete Temperaturmesseinrichtung 13 vorgesehen, die zum Messen der Temperatur der zuletzt aufgetragenen bzw. obersten Pulverschicht in einem Messbereich 14 dient.

Durch eine Prozesskammer 16 ist das Baufeld von der Umgebung abgeschlossen. Dadurch kann ggf. die Oxidation des Pulvers verhindert werden.

Eine Steuer- und/oder Regeleinrichtung 17 dient zum Steuern und/oder Regeln der Bewegung B des Beschichters 8, der Bewegung A des Trägers 2, der Leistung der Heizeinrichtung 12, der Leistung der Bestrahlungseinrichtung 6 und der Ablenkung durch die Ablenkeinrichtung 7. Dazu ist die Steuer- und/oder Regeleinrichtung 17 mit dem Antrieb des Beschichters 8, dem Antrieb 4, der Heizeinrichtung 12, der Temperaturmesseinrichtung 13, der Ablenkeinrichtung 7 sowie mit der Bestrahlungseinrichtung 6 verbunden.

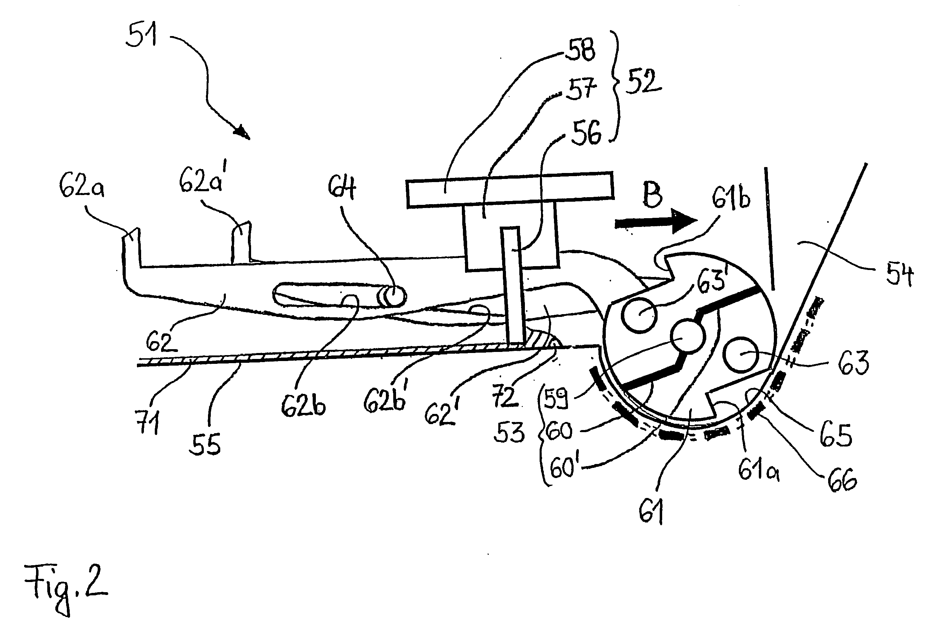

Fig. 2 zeigt eine erste Ausführungsform der Vorrichtung zum Auftragen von Schichten eines pulverförmigen Materials.

Die Vorrichtung 51 zum Auftragen einer Schicht des pulverförmigen Materials nach einer ersten Ausführungsform weist einen Beschichter 52, eine als Förderwalze 53 ausgebildete Materialtransporteinrichtung sowie eine als Zuführschacht 54 ausgebildete Materialzuführeinrichtung auf.

Der Beschichter 52 ist über einer Arbeitsebene 55 (Baufeld) zwischen zwei Endpositionen mit einem durch den Pfeil B angedeuteten Antrieb hin und her bewegbar. Er weist eine Klinge 56, ein erstes Betätigungselement 57 und ein zweites Betätigungselement 58 auf.

Die Förderwalze 53 weist zwei um eine gemeinsame Achse 59 drehbare Schaufeln 60, 60' auf. Senkrecht zur Achse 59 ist eine Nockenscheibe 61 mit zwei Nocken 61a und 61b fest mit der Förderwalze 53 verbunden.

Mit der Nockenscheibe 61 sind mit ihrem jeweiligen einen ersten Ende zwei längliche Pleuel 62, 62' exzentrisch drehbar verbunden. An ihrem anderen zweiten Ende weisen die Pleuel 62, 62' jeweils einen hakenförmigen Abschnitt 62a bzw. 62a' auf, der jeweils als Angriffspunkt für das zweite Betätigungselement 58 des Beschichters dient. Die Drehachsen 63, 63', um die die beiden Pleuel 62, 62' relativ zu der Nockenscheibe 61 drehbar sind, liegen mit der Achse 59 in einer Ebene und sind parallel zu der Achse 59. Zwischen ihrem ersten und zweiten Ende weisen die Pleuel 62, 62' jeweils ein Langloch 62b bzw. 62b' auf. Die Bewegung der Pleuel 62, 62' wird durch einen in die beiden Langlöcher 62b, 62b' eingesetzten Zapfen 64 geführt, wobei der Zapfen relativ zur Position der Förderwalze unbeweglich ist. Die Langlöcher 62b, 62b' sind dabei derart ausgeführt, dass sich die beiden hakenförmigen Abschnitte 62a, 62a' beim Drehen der Förderwalze augrund der Führung durch den Zapfen 64 nicht nur parallel zur Arbeitsebene 55, sondern auch senkrecht zu der Arbeitsebene auf und ab bewegen.

Die Förderwalze ist in einer mit einer Heizung 66 beheizten Wanne 65 in der Bewegungsrichtung B des Beschichters gesehen seitlich von der Arbeitsebene 55 angeordnet. Diese Wanne 65 ist an die Förderwalze 53 derart angepasst, dass sich die Enden der Schaufeln 60, 60' beim Drehen der Förderwalze 53 innerhalb der Wanne 65 entlang der Wannenwand bewegen.
Auf der dem Baufeld 55 abgewandten Seite der Wanne 65 befindet sich der Zuführschacht 54. Der Zuführschacht 54 dient dazu, dem Beschichter 52 Pulver für das Herstellen einer Pulverschicht zuzuführen.

Im Folgenden wird der Betrieb der zuvor beschriebenen Lasersintervorrichtung gemäß einem Verfahren nach einer ersten Ausführungsform beschrieben werden.

Zunächst wird wie in Fig. 2 dargestellt durch Verfahren des Beschichters 52 parallel zur Arbeitsebene 55 eine erste Pulverschicht 71 auf den Träger 2 oder auf eine zuvor verfestigte Schicht aufgebracht. Dabei wird überschüssiges Pulver 72 von der Klinge 56 nach außen aus dem Baufeld geschoben.

In einer in Fig. 2 dargestellten Phase des Betriebs der Vorrichtung nach der ersten Ausführungsform befindet sich die erste Schaufel 60 unterhalb der Arbeitsebene 55 und der Beschichter bewegt sich zum Herstellen einer ersten Schicht 71 des pulverförmigen Materials auf die Förderwalze 53 zu. Schließlich wird das zuvor genannte überschüssige Material 72 von der Klinge 56 auf die erste Schaufel 60 geschoben (der Übersichtlichkeit halber ist in Fig. 2 kein Pulver in der Materialtransporteinrichtung eingezeichnet).

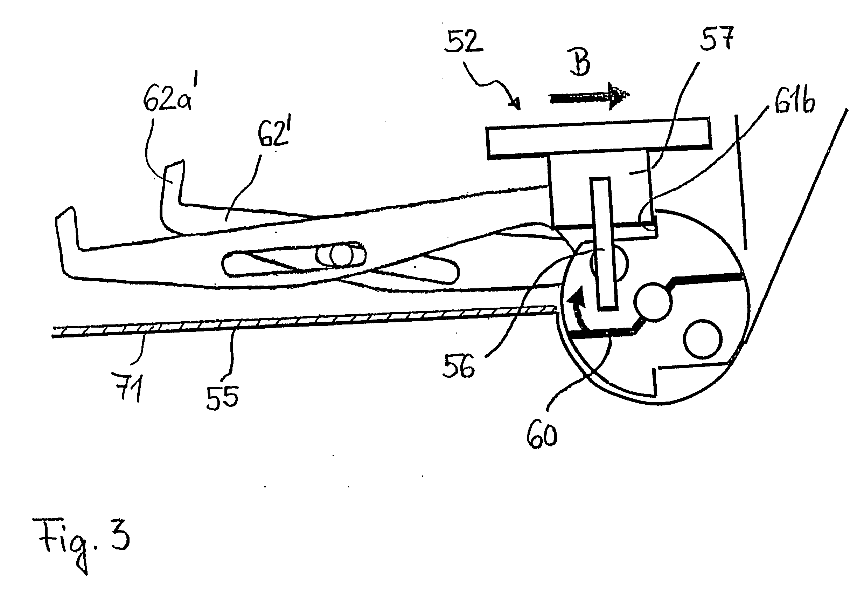

In einer in Fig. 3 dargestellten Phase des Betriebs der Vorrichtung drückt der Beschichter mit dem ersten Betätigungselement 57 gegen die Nocke 61b und dreht bis er in einer ersten Endposition angekommen ist die Förderwalze um einen Winkel von etwa 20° - 40° weiter. Dadurch wird Pulver auf der ersten Schaufel 60 auf der dem Baufeld zugewandten Seite (Baufeldseite) der Klinge 56 angehoben. Wenn sich der Beschichter in der ersten Endposition befindet, ist ein Großteil des Pulvers auf der Schaufel 60 (in einer Richtung senkrecht zur Arbeitsebene gesehen) oberhalb des Niveaus, das durch das untere Ende der Klinge definiert ist. Gleichzeitig mit dem Drehen der Förderwalze wird der hakenförmige Abschnitt 62a' an dem einen Ende des Pleuels 62' relativ zur Arbeitsebene 55 angehoben. Die Vorrichtung ist damit vorbereitet zum Aufbringen einer nächsten Pulverschicht durch Verfahren des Beschichters in Richtung weg von der Förderwalze zu der zweiten Endposition auf der anderen Seite des Baufelds.

Nach dem Aufbringen der Schicht 71 des pulverförmigen Materials erfolgt die Verfestigung an dem Querschnitt des Objekts in dieser Schicht entsprechenden Stellen durch Belichtung mit dem Laser in an sich bekannter Art und Weise.

Entscheidend für die Qualität des fertigen Objekts ist dabei insbesondere, dass die Temperatur der zu verfestigenden obersten Pulverschicht eine Temperatur in einem bestimmten Bereich, dem Prozessfenster hat. Oberhalb dieses Prozessfensters wird das Pulver schon ohne zusätzliche Strahlungsenergie gesintert, während sich bei Temperaturen unterhalb des Prozessfensters Verspannungen in der verfestigten Schicht ausbilden. Vielfach wird auch der sogenannte Curl-Effekt, bei dem sich die Ränder der verfestigten Schicht aufbiegen bzw. aufrollen, auf eine zu geringe Temperatur der obersten Pulverschicht zurückgeführt. Die mit dem Beschichter aufgebrachte Pulverschicht muss daher zum Erreichen guter Ergebnisse, insbesondere zum Vermeiden von Verspannungen in dem hergestellten Objekt, vor dem Verfestigen mit der Heizeinrichtung 12 auf eine Arbeitstemperatur T_{A} innerhalb des Prozessfensters erwärmt werden.

Dazu wird nach dem Aufbringen der Pulverschicht die Temperatur dieser Schicht mit der Temperaturmesseinrichtung 13 gemessen. In Abhängigkeit von der dabei gemessenen Temperatur wird die Heizleistung der Heizeinrichtung 12 bestimmt. Ist die oberste Pulverschicht auf die Arbeitstemperatur T_{A} erwärmt, so werden die dem Querschnitt des Objekts entsprechenden Stellen in der Schicht des Aufbaumaterials durch Bestrahlen mit dem Laser verfestigt.

Nach dem Verfestigen einer Schicht wird der Träger 2 um eine der Schichtdicke entsprechende Strecke abgesenkt und mit dem Beschichter eine neue Pulverschicht 73 auf die zuvor mit dem Laser belichtete Schicht 71 aufgebracht.

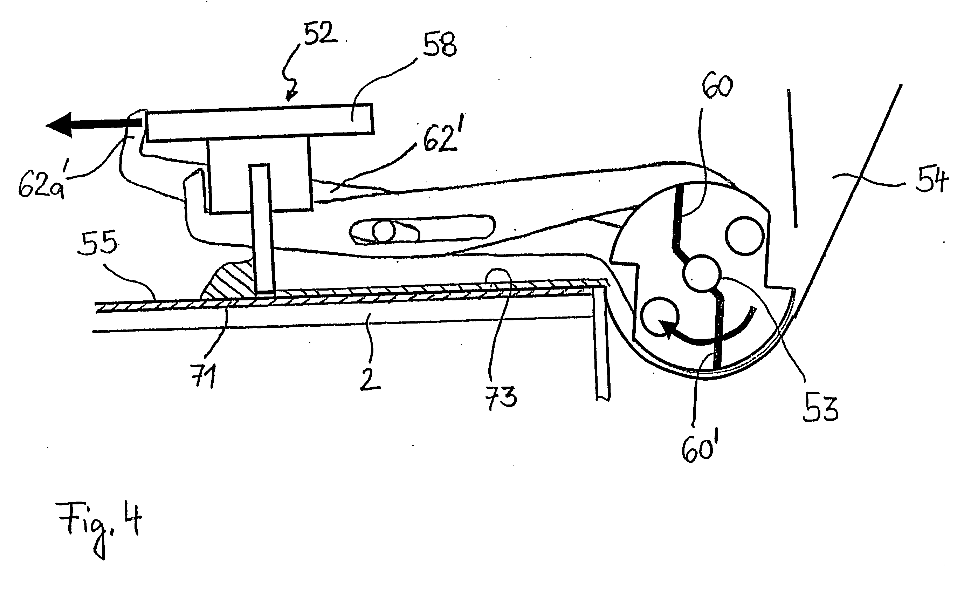

In einer in Fig. 4 dargestellten Phase des Betriebs bewegt sich der Beschichter 52 zum Erzeugen einer nächsten Pulverschicht 73 von der Förderwalze 53 weg in einer Richtung parallel zur Arbeitsebene 55. Dabei drückt das zweite Betätigungselement 58 schließlich auf den angehobenen hakenförmigen Abschnitt 62a' des Pleuels 62'. Dadurch wird der Pleuel 62' in der Bewegungsrichtung des Beschichters 52 mitgenommen und die Förderwalze 53 weiter gedreht. Die Förderwalze wird dabei um einen Winkel von etwa 140° - 160° gedreht. Das sich auf der Schaufel 60 noch befindliche überschüssige Pulver wird zum Zuführbereich unterhalb des Zuführschachts 54 befördert, aus dem Zuführbereich wird gleichzeitig von der zweiten Schaufel 60' Pulver aus dem Zuführbereich in Richtung zum Baufeld befördert. Das dabei aus dem Zuführbereich verbrauchte Pulver rieselt dabei aus dem Zuführschacht nach. Ist der Zuführbereich mit Pulver aufgefüllt stoppt das Nachrieseln, d.h. die Zufuhr von Pulver aus dem Zuführschacht, von selbst. Mit der Bewegung des Pleuels 62' senkt sich in dieser Phase der hakenförmige Abschnitt 62a' wieder zur Arbeitsebene 55 hin bis das zweite Betätigungselement nicht mehr dagegen drückt und der Pleuel 62' nicht mehr weiter von dem Beschichter 52 mitgenommen wird.

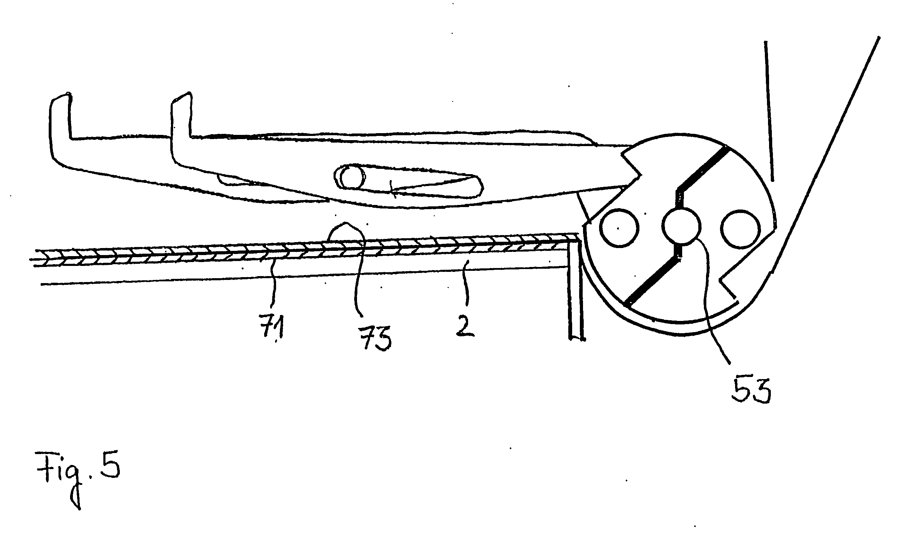

In Fig. 5 ist die Vorrichtung in der Phase des Betriebs dargestellt, in der der Beschichter 52 sich auf der anderen, in den Figuren 2 bis 5 nicht mehr dargestellten Seite des Baufelds befindet. Der Beschichter wird in einer Richtung von der Förderwalze 53 weg bewegt bis in dem gesamten Baufeld durch den Beschichter eine Schicht 73 des pulverförmigen Materials aufgetragen ist. Die Förderwalze 53 ist in dieser Phase um 180° gegenüber der in Fig. 2 dargestellten Stellung gedreht.

Mit den Figuren 2 bis 5 wurde der Betrieb der Materialtransporteinrichtung und der Materialzufuhreinrichtung auf einer ersten Seite des Baufelds beschrieben. Auf der anderen zweiten Seite der ersten gegenüberliegenden Seite des Baufelds befindet sich eine gleichartige Vorrichtung bestehend aus Förderwalze, Wanne, Zuführeinrichtung und Pleueln, die genauso arbeitet wie mit Fig. 2 bis 5 oben beschrieben wurde. Zum Erzeugen einer nächsten Schicht wird der Beschichter 52 wieder wie in Fig. 2 dargestellt in Richtung zu der Förderwalze 53 hin bewegt.

Dann werden die zuvor beschriebenen Schritte wiederholt bis die Herstellung des dreidimensionalen Objekts abgeschlossen ist.

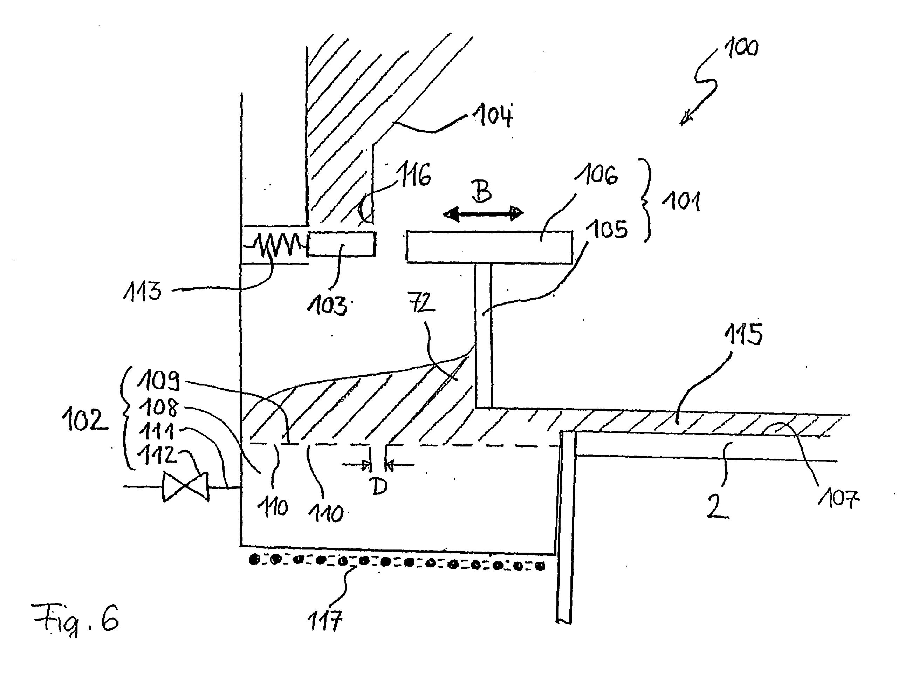

In Fig. 6 ist eine Vorrichtung 100 zum Auftragen von Schichten aus einem pulverförmigen Material nach einer zweiten Ausführungsform dargestellt.

Die Vorrichtung zur wiederholten Erzeugung einer Pulverschicht nach einer zweiten Ausführungsform weist einen Beschichter 101 eine als Fluidisierungeinrichtung 102 ausgebildete Materialtransporteinrichtung und eine mit einem Verschluss 103 versehene Zuführeinrichtung 104 auf.

Der Beschichter 101 ist wie bei der ersten Ausführungsform über einer Arbeitsebene 107 zwischen zwei Endpositionen mit einem durch den Pfeil B angedeuteten Antrieb hin und her bewegbar. Er weist eine Klinge 105 und ein Betätigungselement 106 auf.

Die Fluidisierungseinrichtung weist eine Kammer 108 zum Vorwärmen des zur Fluidisierung eingesetzten Stickstoffs, ein die Kammer 108 nach oben abschließendes Fluidisierungsblech 109 und eine mit einem Ventil 112 versehene Zuleitung 111 für Stickstoff in die Kammer 108 auf. Zur Vorwärmung des Stickstoffs ist die Kammer 108 mit einer Heizeinrichtung 117 (z.B. eine Widerstandsheizung mit Temperaturregelung) versehen. Das Fluidisierungsblech 109 ist mit einer Vielzahl kleiner Öffnungen 110 versehen, die einen geringeren Durchmesser D als der der verwendeten Pulverkörner haben. Eine Gaszuleitung 111 führt in die Kammer 108, wobei die Zufuhr von Gas in die Kammer über ein Ventil 112 steuerbar ist.

Über dem Fluidisierungsblech ist eine Materialzuführeinrichtung 104 mit einem Verschluss 103 ausgebildet. Der Verschluss 103 ist derart augebildet und angeordnet, dass er beim Verfahren des Beschichters in seine Endposition durch das Betätigungselement 106 zur Seite gedrückt und damit die Materialzuführeinrichtung mit einer Öffnung 116 zu einem sich unterhalb der Materialzuführeinrichtung befindlichen Zuführbereich hin geöffnet wird. Dazu ist das Betätigungselement 106 so ausgebildet, dass es beim Öffnen des Verschlusses nicht selbst in den Öffnungsbereich der Materialzuführeinrichtung kommt. Insbesondere drückt das Betätigungselement beim Öffnen auf den Verschluss 103 in einer Richtung senkrecht zur Bildebene von Fig. 6 gesehen hinter oder vor der Öffnung 116 des Behälters 104 auf den Verschluss 103. Seitlich ist der Verschluss durch eine Feder 113 an einer Seitenwand befestigt, die den Verschluss in die geschlossene Stellung schiebt, wenn das Betätigungselement 106 nicht gegen den Verschluss 103 drückt.

Auf der anderen Seite des Baufelds ist spiegelsymmetrisch zu der zuvor beschriebenen Materialzuführeinrichtung und Fluidisierungseinrichtung eine weitere zweite Materialzuführeinrichtung und eine weitere zweite Fluidisierungseinrichtung vorgesehen.

Im Betrieb wird zunächst eine erste Pulverschicht 115 auf die Arbeitsebene 107 aufgetragen, indem der Beschichter über dem Baufeld parallel zur Arbeitsebene 107 in Richtung zu der Materialzuführeinrichtung verfahren wird. Dabei wird überschüssiges Pulver aus dem Baufeld nach außen auf das Fluidisierungsblech 109 geschoben. Der Beschichter wird weiter in seine Endposition verfahren und öffnet damit durch Drücken des Betätigungselementes 106 gegen den Verschluss 103 die Materialzuführeinrichtung 104, aus der dann solange Pulver in den Zuführbereich unterhalb der Materialzuführeinrichtung nachrieselt bis dieser aufgefüllt ist und das Nachrieseln von selbst endet. Anschließend wird der Beschichter gerade soweit aus der Endposition verfahren, dass die Materialzuführeinrichtung wieder durch die Feder 113 und den Verschluss 103 geschlossen wird.

Durch kurzzeitiges Öffnen des Ventils 112 und Einlassen von Stickstoffgas in die Kammer 108 über die Zuleitung 111 wird in dieser Kammer ein Druckstoß erzeugt, der zum Ausstoß von vorgewärmten Stickstoff aus den Öffnungen 110 in das Pulver über dem Fluidisierungsblech 109 führt. Dadurch wird dieses Pulver fluidisiert und fließt durch den Spalt zwischen Klinge und Fluidisierungsblech aus dem Zuführbereich auf der einen Seite der klinge 105 auf die andere Seite der Klinge, die dem Baufeld zugewandt ist. Der Beschichter ist damit für das Aufbringen einer nächsten Pulverschicht vorbereitet.

Wie bei der ersten Ausführungsform wird die Pulverschicht in an sich bekannter Art und Weise mit der Heizeinrichtung 12 vorgewärmt und an dem Querschnitt eines Objekts entsprechenden Stellen verfestigt.

Im nächsten Schritt erfolgt nach dem Absenken des Trägers 2 wie bei der ersten Ausführungsform das Auftragen einer nächsten Pulverschicht auf die Arbeitsebene in dem Baufeld durch Verfahren des Beschichters aus der ersten Endposition zu der zweiten Endposition auf der anderen Seite des Baufelds.

Der Betrieb der zweiten Zuführeinrichtung und der zweiten Materialtransporteinrichtung ist wie der zuvor beschriebene Betrieb der in Fig. 6 dargestellten Vorrichtungen.

Dann werden die zuvor beschriebenen Schritte wiederholt bis die Herstellung des dreidimensionalen Objekts abgeschlossen ist.

Alternativen und Abwandlungen der oben beschriebenen Vorrichtungen und der oben beschriebenen Verfahren sind möglich.

Die Vorrichtung nach der zweiten Ausführungsform wurde mit einer Fluidisierungseinrichtung beschrieben, bei der die Fluidisierung durch Einbringen von vorgewärmtem Stickstoff erreicht wird. Die Fluidisierung kann aber auch durch Einbringen eines anderen Gases erfolgen. Eine weitere Möglichkeit, die Fluidisierung zu erzielen besteht darin, das Pulver in Schwingung zu versetzen.

Die Vorrichtung nach der ersten und der zweiten Ausführungsform wurde so beschrieben, dass auf beiden Seiten des Baufelds gleiehe Materialtransporteinrichtungen und Materialzuführeinrichtungen vorgesehen sind. Es ist jedoch möglich die Vorrichtungen nach der ersten und der zweiten Ausführungsform miteinander derart zu kombinieren, dass auf der einen Seite des Baufeldes eine Materialtransporteinrichtung und eine Materialzuführeinrichtung nach der ersten Ausführungsform vorgesehen ist, während auf der anderen Seite eine Materialtransporteinrichtung und eine Materialzuführeinrichtung nach der zweiten Ausführungsform vorgesehen ist.

Es ist auch möglich, wie bei der ersten und zweiten Ausführungsform auf beiden Seiten des Baufeldes eine erfindungsgemäße Materialtransporteinrichtung vorzusehen, aber nur auf einer Seite des Baufeldes eine Materialzuführeinrichtung vorzusehen. Entsprechend ist im Betrieb von der Materialtransporteinrichtung auf der Seite, auf der sich die Materialzuführeinrichtung befindet eine für zwei Schichten ausreichende Menge an Material bereitzustellen. Diese Abwandlung erlaubt eine einfachere und kompaktere Bauweise der Vorrichtung.

Die Erfindung wurde anhand einer Lasersintervorrichtung beschrieben, bei der als Strahlungsquelle ein Laser verwendet wurde. Jede andere Strahlungsquelle, mit der elektromagnetische oder Teilchenstrahlung in das Aufbaumaterial eingebracht werden kann ist möglich. So kann z.B. eine Strahlungsquelle für inkohärente Lichtstrahlung, für IR-Strahlung, für Röntgenstrahlung oder für Elektronenstrahlung als Strahlungsquelle verwendet werden. Dementsprechend ist ein Aufbaumaterial zu verwenden, das mit der jeweiligen Strahlung verfestigt werden kann.

Alternativ kann die erfindungsgemäße Vorrichtung zum Auftragen von Pulverschichten auch in 3D-Druckern verwendet werden, bei denen die Pulverschichten an dem Querschnitt des herzustellenden Objektes durch selektives Auftragen eines Bindemittels oder Klebers verfestigt werden.

Bei der oben beschriebenen Vorrichtung wird als Heizeinrichtung ein Infrarotstrahler oberhalb der Arbeitsebene beschrieben. Andere Möglichkeiten, eine zuletzt aufgetragene Schicht des Aufbaumaterials zu erwärmen, sind denkbar. Z.B. kann die Zirkulation von warmer Luft oder Stickstoff zum Vorwärmen der Schicht verwendet werden, die über die frisch aufgetragene Schicht geleitet wird.

Das Ausführungsbeispiel einer Vorrichtung zur Herstellung eines dreidimensionalen Objekts wurde mit einer Heizeinrichtung zum Vorerwärmen einer aufgetragenen aber noch nicht gesinterten Pulverschicht auf eine für das Verfestigen bzw. Sintern geeignete Arbeitstemperatur T_{A} sowie mit einer Temperaturmesseinrichtung vorgesehen, die zum Messen der Temperatur der zuletzt aufgetragenen bzw. obersten Pulverschicht dient. Je nach verwendetem Material und Prozessführung kann von einer Vorerwärmung der aufgetragenen Materialschicht bei der erfindungsgemäßen Vorrichtung zum Herstellen eines dreidimensionalen Objekts abgesehen werden. Dementsprechend kann die Vorrichtung zur Herstellung eines dreidimensionalen Objekts auch ohne Heizeinrichtung und ohne Temperaturmessgerät ausgebildet sein.

Die zweite Ausführungsform wurde so beschrieben, dass die Fluidisierung mit vorgewärmten Gas durchgeführt wurde. Jedoch ist es auch möglich, die Fluidisierung mit nicht vorgewärmten Gas zu realisieren. Entsprechend muss die Fluidisierungseinrichtung nicht notwendigerweise eine Heizeinrichtung zum Vorwärmen des zur Fluidisierung verwendeten Gases aufweisen.

## Patentansprüche

1. Vorrichtung zum Auftragen von Schichten eines pulverförmigen Materials (71, 73; 115) mit einem Beschichter (8; 52; 101), der zum Auftragen einer Materialschicht (71, 73; 115) zwischen zwei Endpositionen hin- und her bewegbar ist und eine Klinge (56; 105) zum Abtragen von überschüssigem Material (72) beim Erzeugen einer Materialschicht (71, 73; 115) aufweist, **gekennzeichnet durch**
eine Materialtransporteinrichtung (11; 53; 102), mit der Material von einer Seite der Klinge (56; 105) auf die andere Seite der Klinge transportiert werden kann, wobei die Materialtransporteinrichtung (11) eine um eine Achse (59) drehbare Förderwalze (53) zum Transportieren von Material von der einen Seite auf die andere Seite der Klinge (56) aufweist.

2. Vorrichtung nach Anspruch 1, weiter mit einer Materialzuführeinrichtung (9, 10; 54; 104) die einen Vorratsbehälter (10) für das Material aufweist und derart ausgebildet ist, dass die Zufuhr an Material in einen Zuführbereich automatisch unterbrochen wird, wenn in dem Zuführbereich eine vorbestimmte Menge des Materials vorhanden ist.

3. Vorrichtung nach Anspruch 1 oder 2, bei der eine Mechanik (61, 62, 62', 63, 63', 64) vorgesehen ist, mit der die Bewegung (B) des Beschichters (52) derart an die Drehung der Förderwalze (53) gekoppelt ist, dass beim einmaligen Hin- und Herbewegen des Beschichters (52) Material mit der Förderwalze (53) von einer Seite der Klinge (56) auf die andere Seite der Klinge (56) transportiert wird.

4. Vorrichtung nach einem der Ansprüche 1 bis 3, wobei die Förderwalze (53) zwei zur Drehachse der Förderwalze (53) spiegelsymmetrische Schaufeln (60, 60') aufweist.

5. Vorrichtung nach einem der Ansprüche 1 bis 4, wobei die Förderwalze (53) eine Walze mit mindestens einer als Ausnehmung ausgebildeten Kammer ist, mit der durch Drehen der Walze Material mittels der Kammer von einer Seite auf die andere Seite der Klinge transportiert werden kann.

6. Vorrichtung nach einem der Ansprüche 1 bis 5, wobei eine Wanne (65) vorgesehen ist, die an die Form der Förderwalze angepasst ist und einen Teil der Förderwalze aufnimmt.

7. Vorrichtung nach Anspruch 6, wobei die Wanne (65) eine Heizung zum Vorwärmen des Materials in der Wanne (65) aufweist.

8. Vorrichtung zum Auftragen von Schichten eines pulverförmigen Materials (71, 73; 115) mit einem Beschichter (8; 52; 101), der zum Auftragen einer Materialschicht (71, 73; 115) zwischen zwei Endpositionen hin- und her bewegbar ist und eine Klinge (56; 105) zum Abtragen von überschüssigem Material (72) beim Erzeugen einer Materialschicht (71, 73; 115) aufweist, **gekennzeichnet durch**
eine Materialtransporteinrichtung (11; 53; 102), mit der Material von einer Seite der Klinge (56; 105) auf die andere Seite der Klinge transportiert werden kann, wobei die Transporteinrichtung (11) eine Fluidisierungseinrichtung (102) ist, mit der Gas in das Material derart eingeblasen werden kann, dass das Material fluidisiert und von einer Seite auf die andere Seite der Klinge (105) fließt, wenn sich der Beschichter (101) in einer vorbestimmten Position befindet.

9. Vorrichtung zum Auftragen von Schichten eines pulverförmigen Materials (71, 73; 115) mit einem Beschichter (8; 52; 101), der zum Auftragen einer Materialschicht (71, 73; 115) zwischen zwei Endpositionen hin- und her bewegbar ist und eine Klinge (56; 105) zum Abtragen von überschüssigem Material (72) beim Erzeugen einer Materialschicht (71, 73; 115) aufweist, **gekennzeichnet durch**
eine Materialtransporteinrichtung (11; 53; 102), mit der Material von einer Seite der Klinge (56; 105) auf die andere Seite der Klinge transportiert werden kann, wobei die Transporteinrichtung (11) eine Fluidisierungseinrichtung ist, mit der das Material derart zum Vibrieren gebracht werden kann, dass das Material fluidisiert und von einer Seite auf die andere Seite der Klinge fließt, wenn sich der Beschichter in vorbestimmten Position befindet.

10. Vorrichtung nach einem der Ansprüche 1 bis 9, wobei auf den beiden Seiten des Baufelds, die den beiden Endpositionen des Beschichters entsprechen, jeweils eine Transporteinrichtung (11; 53; 102) vorgesehen ist.

11. Verfahren zum Auftragen von Schichten eines pulverförmigen Materials (71, 73; 115) mit einem Beschichter (52; 101), der zum Auftragen einer Materialschicht zwischen zwei Endpositionen bewegbar ist und eine Klinge (56; 105) aufweist, mit dem Schritt:
(a) Auftragen einer Materialschicht mit dem Beschichter (52; 101) auf eine Oberfläche, wobei die Klinge dabei das überschüssige Material (72) abträgt und aus dem Baufeld (55) schiebt; **dadurch gekennzeichnet, dass** das Verfahren weiter den folgenden Schritt aufweist:
(b) Transportieren von Material von einer dem Baufeld abgewandten Seite auf die andere dem Baufeld zugewandten Seite der Klinge des Beschichters;

12. Verfahren nach Anspruch 11, wobei Material aus einem Vorratsbehälter (10) durch eine Materialzuführeinrichtung (54; 104) in einen Zuführbereich neben dem Baufeld (55; 107) zugeführt wird.

13. Verfahren nach Anspruch 12, wobei in Schritt (b) das Material aus dem Zuführbereich auf der dem Baufeld (55; 107) abgewandten Seite auf die andere dem Arbeitsbereich zugewandte Seite der Klinge (56; 105) des sich in einer Endposition oder nahe einer Endposition befindlichen Beschichters (52; 101) transportiert wird.

14. Verfahren nach Anspruch 12 oder 13, wobei in Schritt (a) das überschüssige Material (72) von der Klinge (56; 105) in den Zuführbereich geschoben wird.

15. Verfahren nach einem der Ansprüche 12 bis 14, wobei das Zuführen von Material in den Zuführbereich beendet wird, sobald sich in dem Zuführbereich eine vorbestimmte Menge an Material befindet.

16. Verfahren nach einem der Ansprüche 11 bis 15, wobei der Transport des Materials in Schritt (b) durch eine drehbare Förderwalze (53) erfolgt.

17. Verfahren nach einem der Ansprüche 11 bis 15, wobei der Transport des Materials in Schritt (b) durch eine Fluidisierung des Materials mittels einer Fluidisierungseinrichtung (102) erfolgt.

18. Vorrichtung zum Herstellen eines dreidimensionalen Objekts durch Verfestigen von Schichten eines Materials an den dem jeweiligen Querschnitt des Objekts entsprechenden Stellen mit einer Vorrichtung zum Aufbringen von Schichten eines pulverförmigen Materials nach einem der Ansprüche 1 bis 10.

## Claims

1. Device for applying layers of a powdery material (71, 73; 115) having a coater (8; 52; 101) which, in order to apply a layer (71, 73; 115) of material, can be moved to and fro between two end positions and has a blade (56; 105) for removing excess material (72) when a layer (71, 73; 115) of material is produced,
**characterized by**
a material-transporting device (11; 53; 102) with which material can be transported from one side of the blade (56; 105) to the other side of the blade, wherein the material-transporting device (11) has a feed roller (53) which can be rotated about an axle (59) and has the purpose of transporting material from one side of the blade (56) to the other.

2. Device according to Claim 1, also having a material-feeding device (9, 10; 54; 104) which has a reservoir container (10) for the material and is embodied in such a way that the feeding of material into a feed area is interrupted automatically if a predetermined quantity of the material is present in the feed area.

3. Device according to Claim 1 or 2, in which a mechanism (61, 62, 62', 63, 63', 64) is provided with which the movement (B) of the coater (52) is coupled to the rotation of the feed roller (53) in such a way that, when the coater (52) moves to and fro once, material is transported from one side of the blade (56) to the other side of the blade (56) by means of the feed roller (53).

4. Device according to one of Claims 1 to 3, wherein the feed roller (53) has two vanes (60, 60') which are mirror-symmetrical with respect to the rotational axis of the feed roller (53).

5. Device according to one of Claims 1 to 4, wherein the feed roller (53) is a roller with at least one chamber which is embodied as a recess and with which, by rotating the roller, material can be transported from one side of the blade to the other by means of the chamber.

6. Device according to one of Claims 1 to 5, wherein a trough (65) is provided which is matched to the shape of the feed roller and takes up part of the feed roller.

7. Device according to Claim 6, wherein the trough (65) has a heater for preheating the material in the trough (65).

8. Device for applying layers of a powdery material (71, 73; 115) having a coater (8; 52; 101) which, in order to apply a layer (71, 73; 115) of material, can be moved to and fro between two end positions and has a blade (56; 105) for removing excess material (72) when a layer (71, 73; 115) of material is produced,
**characterized by**
a material-transporting device (11; 53; 102) with which material can be transported from one side of the blade (56; 105) to the other side of the blade, wherein the transporting device (11) is a fluidizing device (102) with which gas can be blown into the material in such a way that the material fluidizes and flows from one side of the blade (105) to the other if the coater (101) is in a predetermined position.

9. Device for applying layers of a powdery material (71, 73; 115) having a coater (8; 52; 101) which, in order to apply a layer (71, 73; 115) of material, can be moved to and fro between two end positions and has a blade (56; 105) for removing excess material (72) when a layer (71, 73; 115) of material is produced,
**characterized by**
a material-transporting device (11; 53; 102) with which material can be transported from one side of the blade (56; 105) to the other side of the blade, wherein the transporting device (11) is a fluidizing device with which the material can be made to vibrate in such a way that the material fluidizes and flows from one side of the blade to the other if the coater is in a predetermined position.

10. Device according to one of Claims 1 to 9, wherein a transporting device (11; 53; 102) is provided in each of the two sides of the construction space which correspond to the two end positions of the coater.

11. Method for applying layers of a powdery material (71, 73; 115) having a coater (52; 101) which, in order to apply a layer of material, can be moved between two end positions and has a blade (56; 105), having the step:
(a) application of a layer of material by means of the coater (52; 101) to a surface, wherein in the process the blade removes the excess material (72) and pushes it out of the construction' space (55); **characterized in that** the method also comprises the following step:
(b) transportation of material from a side of the blade of the coater facing away from the construction space to the other side of the blade of the coater facing the construction space.

12. Method according to Claim 11, wherein material is fed from a reservoir container (10) into a feed area next to the construction space (55; 107) through a material-feeding device (54; 104).

13. Method according to Claim 12, where, in step (b), the material is transported from the feed area on the side facing away from the construction space (55; 107) to the other side of the blade (56; 105), facing the working area, of the coater (52; 101) which is located in an end position or near to an end position.

14. Method according to Claim 12 or 13, wherein, in step (a), the excess material (72) is pushed from the blade (56; 105) into the feed area.

15. Method according to one of Claims 12 to 14, wherein the feeding of material into the feed area is terminated as soon as a predetermined quantity of material is located in the feed area.

16. Method according to one of Claims 11 to 15, wherein the transporting of the material in step (b) is carried out by means of a rotatable feed roller (53).

17. Method according to one of Claims 11 to 15, wherein the transporting of the material in step (b) is carried out by fluidization of the material by means of a fluidizing device (102).

18. Device for manufacturing a three-dimensional object by compacting layers of a material at the locations corresponding to the respective cross section of the object by means of a device for applying layers of a powdery material according to one of Claims 1 to 10.

## Revendications

1. Dispositif d'application de couches d'une matière pulvérulente (71, 73; 115) au moyen d'un appareil de recouvrement (8 ; 52 ; 101) déplaçable en va-et-vient entre deux positions finales pour l'application d'une couche de matière (71, 73 ; 115) et qui comporte une lame (56 ; 105) pour le retrait de matière excédentaire (72) lors de la production d'une couche de matière (71, 73 ; 115), **caractérisé par**
un dispositif de transport de matière (11 ; 53 ; 102) au moyen duquel la matière peut être transportée d'un côté de la lame (56 ; 105) vers l'autre côté de la lame, ledit dispositif de transport de matière (11) comportant un rouleau de transport (53) rotatif autour d'un axe (59) pour le transport de matière d'un côté vers l'autre côté de la lame (56).

2. Dispositif selon la revendication 1, avec aussi un dispositif d'alimentation en matière (9, 10 ; 54 ; 104) comportant un réservoir (10) de matière et réalisé de telle manière que l'alimentation en matière soit automatiquement interrompue dans une zone d'amenée si une quantité définie de matière est présentée dans la zone d'amenée.

3. Dispositif selon la revendication 1 ou 2, où un mécanisme (61, 62, 62', 63, 63', 64) est prévu, au moyen duquel le déplacement (B) de l'appareil de recouvrement (52) est associé à la rotation du rouleau de transport (53) de manière à transporter la matière par le rouleau de transport (53) d'un côté de la lame (56) vers l'autre côté de la lame (56) pour un seul va-et-vient de l'appareil de recouvrement (52).

4. Dispositif selon l'une des revendications 1 à 3, où le rouleau de transport (53) comporte deux palettes (60, 60') à symétrie réflexive par rapport à l'axe de rotation du rouleau de transport (53).

5. Dispositif selon l'une des revendications 1 à 4, où le rouleau de transport (53) est un rouleau avec au moins un compartiment réalisé comme un évidement, au moyen duquel la matière peut être transportée par le compartiment d'un côté vers l'autre côté de la lame par rotation du rouleau.

6. Dispositif selon l'une des revendications 1 à 5, où est prévue un bac (65) ajustée à la forme du rouleau de transport et où est logée une partie du rouleau de transport.

7. Dispositif selon la revendication 6, où le bac (65) comporte un chauffage pour le pré-chauffage de la matière dans le bac (65).

8. Dispositif d'application de couches d'une matière pulvérulente (71, 73 ; 115) au moyen d'un appareil de recouvrement (8 ; 52 ; 101) déplaçable en va-et-vient entre deux positions finales pour l'application d'une couche de matière (71, 73 ; 115) et qui comporte une lame (56 ; 105) pour le retrait de matière excédentaire (72) lors de la production d'une couche de matière (71, 73 ; 115), **caractérisé par**
un dispositif de transport de matière (11 ; 53 ; 102) au moyen duquel la matière peut être transportée d'un côté de la lame (56 ; 105) vers l'autre côté de la lame, ledit dispositif de transport de matière (11) étant un dispositif de fluidisation (102) au moyen duquel du gaz peut être injecté dans la matière de telle manière que la matière soit fluidisée et s'écoule d'un côté vers l'autre côté de la lame (105) quand l'appareil de recouvrement (101) se trouve dans une position prédéfinie.

9. Dispositif d'application de couches d'une matière pulvérulente (71, 73 ; 115) au moyen d'un appareil de recouvrement (8 ; 52 ; 101) déplaçable en va-et-vient entre deux positions finales pour l'application d'une couche de matière (71, 73 ; 115) et qui comporte une lame (56 ; 105) pour le retrait de matière excédentaire (72) lors de la production d'une couche de matière (71, 73 ; 115), **caractérisé par**
un dispositif de transport de matière (11 ; 53 ; 102) au moyen duquel la matière peut être transportée d'un côté de la lame (56 ; 105) vers l'autre côté de la lame, ledit dispositif de transport de matière (11) étant un dispositif de fluidisation au moyen duquel la matière peut être amenée à vibrer de telle manière que la matière soit fluidisée et s'écoule d'un côté vers l'autre côté de la lame quand l'appareil de recouvrement se trouve dans une position prédéfinie.

10. Dispositif selon l'une des revendications 1 à 9, où un dispositif de transport (11 ; 53 ; 102) est prévu sur chacun des deux côtés du champ de production correspondant aux deux positions finales de l'appareil de recouvrement.

11. Procédé d'application de couches d'une matière pulvérulente (71, 73 ; 115) au moyen d'un appareil de recouvrement (52 ; 101) déplaçable entre deux positions finales pour l'application d'une couche de matière et qui comporte une lame (56 ; 105), comprenant l'étape
a) d'application par l'appareil de recouvrement (52 ; 101) d'une couche de matière sur une surface, la lame raclant la matière excédentaire (72) et la repoussant hors du champ de production (55) ; **caractérisé en ce que** le procédé comprend en outre l'étape suivante :
b) transport de la matière d'un côté de la lame de l'appareil de recouvrement, éloigné du champ de production, vers l'autre côté de la lame proche du champ de production ;

12. Procédé selon la revendication 11, où la matière est amenée par un dispositif d'alimentation en matière d'un réservoir (10) vers une zone d'amenée à côté du champ de production (55 ; 107).

13. Procédé selon la revendication 12, où, en étape (b), la matière est transportée de la zone d'amenée sur le côté de la lame éloigné du champ de production (55 ; 107), vers l'autre côté de la zone d'amenée sur le côté de la lame (56 ; 105) proche du champ de production, où l'appareil de recouvrement (52 ; 101) se trouve dans une position finale ou à proximité d'une position finale.

14. Procédé selon la revendication 12 ou 13, où, en étape (a), la matière excédentaire (72) est repoussée dans la zone d'amenée, par la lame (56 ; 105).

15. Procédé selon l'une des revendications 12 à 14, où l'alimentation en matière vers la zone d'amenée est terminée dès qu'une quantité prédéfinie de matière est présentée dans la zone d'amenée.

16. Procédé selon l'une des revendications 11 à 15, où le transport de matière en étape (b) est exécuté par un rouleau de transport (53) rotatif.

17. Procédé selon l'une des revendications 11 à 15, où le transport de matière en étape (b) est obtenu par fluidisation de la matière au moyen d'un dispositif de fluidisation (102).

18. Dispositif de fabrication d'un objet en trois dimensions par agglomération de couches d'une matière sur les emplacements correspondant à la section de l'objet au moyen d'un dispositif d'application de couches d'une matière pulvérulente selon l'une des revendications 1 à 10.
